# EUROPÄISCHE PATENTSCHRIFT

(11) **EP 2 588 880 B1**
(45) Veröffentlichungstag und Bekanntmachung des Hinweises auf die Patenterteilung: **26.04.2017**
(21) Anmeldenummer: 11716578.7
(22) Anmeldetag: 02.05.2011
(51) Int. Cl.: G01S 7/03, G01S 7/40, G01S 13/34, G01S 7/35, G01S 13/93

(54) **RADARSENSOR FÜR KRAFTFAHRZEUGE**
RADAR SENSOR FOR MOTOR VEHICLES
DÉTECTEUR RADAR POUR VÉHICULE À MOTEUR

(30) Priorität: 29.06.2010 DE 102010030628
(43) Veröffentlichungstag der Anmeldung: 08.05.2013
(73) Patentinhaber: Robert Bosch GmbH, 70442 Stuttgart (DE)
(72) Erfinder: HIMMELSTOSS, Armin, 71554 Weissach im Tal (DE); STEINBUCH, Dirk, 71299 Wimsheim (DE)
(86) Internationale Anmeldenummer: PCT/EP2011/056911
(87) Internationale Veröffentlichungsnummer: WO 2012/000701

(56) Entgegenhaltungen:
- WO-A1-2009/124297
- NICOLSON S T ET AL: "Single-Chip W-band SiGe HBT Transceivers and Receivers for Doppler Radar and Millimeter-Wave Imaging", IEEE JOURNAL OF SOLID-STATE CIRCUITS, IEEE SERVICE CENTER, PISCATAWAY, NJ, USA, Bd. 43, Nr. 10, 1. Oktober 2008 (2008-10-01), Seiten 2206-2217, XP011235958, ISSN: 0018-9200, DOI: DOI:10.1109/JSSC.2008.2002934
- PERNDL W ET AL: "A low-noise and high-gain double-balanced mixer for 77 GHz automotive radar front-ends in SiGe bipolar technology", RADIO FREQUENCY INTEGRATED CIRCUITS (RFIC) SYMPOSIUM, 2004. DIGEST OF PAPERS. 2004 IEEE FORT WORTH, TX, USA JUNE 6-8, 2004, PISCATAWAY, NJ, USA,IEEE, 6. Juni 2004 (2004-06-06), Seiten 47-50, XP010714018, DOI: DOI:10.1109/RFIC.2004.1320521 ISBN: 978-0-7803-8333-3

## Beschreibung

### Stand der Technik

Die Erfindung betrifft einen Radarsensor für Kraftfahrzeuge, mit einem Sende- und Empfangsteil, das einen Mischer zum Mischen eines gesendeten Signals mit einem empfangenen Signal aufweist, einer Auswerteschaltung, die durch eine Gleichspannungskopplungseinrichtung mit einem Ausgang des Mischers verbunden ist, und mit einer Kompensationseinrichtung zur Kompensation eines Gleichspannungsoffsets im Ausgangssignal des Mischers, wobei die Kompensationseinrichtung aufgeteilt ist in eine Grobkompensationseinrichtung und eine Feinkompensationseinrichtung in der Auswerteschaltung.

Radarsensoren werden in Kraftfahrzeugen beispielsweise zur Ortung anderer Fahrzeuge im Rahmen eines Abstandsregelsystems oder eines Kollisionswarnsystems eingesetzt. Vom Sende- und Empfangsteil wird über eine Antenne ein Radarsignal gesendet, das in seiner Frequenz rampenförmig moduliert ist. Das von der Antenne empfangene Radarecho wird im Mischer mit einem Anteil dieses gesendeten Signals gemischt, so dass man ein Basisbandsignal erhält, dessen Frequenz dem Frequenzunterschied zwischen gesendetem und empfangenen Signal entspricht. Da dieser Frequenzunterschied von der Signallaufzeit und von der durch den Doppler-Effekt verursachten Frequenzverschiebung abhängig ist, gibt er Auskunft über den Abstand und die Relativgeschwindigkeit des georteten Objekts. In der Auswerteschaltung wird das Basisbandsignal verstärkt und digitalisiert und dann weiteren Auswertestufen zugeführt, beispielsweise einer Transformationsstufe, in der das zeitabhängige Basisbandsignal durch schnelle Fourier-Transformation (FFT) in sein Frequenzspektrum zerlegt wird, in dem sich die georteten Objekte in der Form einzelner Peaks abzeichnen.

Das Sende- und Empfangsteil wird typischerweise durch einen MMIC (Monolithic Microwave Integrated Circuit) gebildet, während es sich bei der Auswerteschaltung typischerweise um einen benutzerspezifischen integrierten Schaltkreis (ASIC), ein sogenanntes RADAR-ASIC handelt. Die Gleichspannungskopplung zwischen dem Mischerausgang und dem RADAR-ASIC ermöglicht es, den vollen Informationsgehalt des Basisbandsignals auszuwerten, da keine Frequenzanteile durch Ausfiltern einer Gleichspannungskomponente verlorengehen. Allerdings führt diese Art der Kopplung dazu, dass bei der Verstärkung des Basisbandsignals auch der darin enthaltene Gleichspannungsanteil mitverstärkt wird, bevor die Analog/Digital-Wandlung erfolgen kann. Der in dieser Weise verstärkte Gleichspannungsoffset kann dazu führen, dass das Basisbandsignal nicht mehr in das Spannungsfenster des Analog/Digital-Wandlers passt, so dass es zu einem Übersteuern und damit zu Verzerrungsfehlern bei der anschließenden Fourier-Transformation kommt.

Aus diesem Grund ist bei bekannten Radarsensoren eine Kompensationseinrichtung vorhanden, die mit Hilfe von Stromquellen und im Signalpfad angeordneten Widerständen eine Kompensation der Gleichspannung in dem Basisbandsignal bewirkt, bevor dieses dem Verstärker zugeführt wird. Die Stromquellen und die Widerstände für die Kompensationseinrichtung befinden sich im RADAR-ASIC.

Ein Nachteil dieser bekannten Ausführung der Kompensationseinrichtung besteht darin, dass die zur Kompensation benötigten Widerstände im Signalpfad zu einem erhöhten Rauschanteil beitragen und somit die Qualität des Signals und damit die Qualität der Radarortung beeinträchtigen. Zwar lässt sich das Rauschen im Prinzip dadurch unterdrücken, dass kleinere Widerstandswerte und entsprechend höhere Stromstärken verwendet werden, doch ist die Erhöhung der Stromstärke nur innerhalb gewisser Grenzen möglich, und sie trägt außerdem signifikant zu einer Erhöhung der Verlustleistung bei. Bisher müssen deshalb die Widerstände so ausgelegt werden, dass man zwischen den einander widersprechenden Zielen, geringes Rauschen und geringe Verlustleistung, einen Kompromiss findet.

Ein Radarsensor mit den eingangs genannten Merkmalen ist aus WO 2009/124297 A1 bekannt.

NICOLSON S T ET AL: "Single Chip W-band SiGe HBT Transceivers and Receivers for Doppler Radar and Millimeter-Wave Imaging", IEEE JOURNAL OF SOLID-STATE CIRCUITS, IEEE SERVICE CENTER, PISCATAWAY, NJ, USA, Bd. 43, Nr. 10, 1. Oktober 2008 (2008-10-01), Seiten 2206-2217, XP011235958, ISSN: 0018-9200, DOI: DOI: 10.11 09/JSSC.2008.2002934
beschreibt einen Radarsensor für ein KFZ, bei dem das Sende- und Empfangsteil ein MMIC ist.

PERNDL W ET AL: "A low-noise and high-gain double-balanced mixer for 77 GHz automotive radar front-ends in SiGe bipolar technology", RADIO FREQUENCY INTEGRATED CIRCUITS (RFIC) SYMPOSIUM, 2004. DIGEST OF PAPERS. 2004 IEEE FORT WORTH, TX, USA JUNE 6-8, 2004, PISCATAWAY, NJ, USA, IEEE, 6. Juni 2004 (2004-06-06), Seiten 47-50, XP010714018, DOI: DOI: 10.1109/RFIC.2004.1320521 ISBN: 978-0-7803-8333-3
beschreibt eine Kompensationseinrichtung mit einer Stromquelle, die einen-Kompensationsstrom in einen Arbeitswiderstand des Mischers einspeist.

### Offenbarung der Erfindung

Aufgabe der Erfindung ist es, einen Radarsensor zu schaffen, der bei gegebenem Rauschanteil verlustärmer ist und bei gegebener Verlustleistung rauschärmer ist.

Diese Aufgabe wird erfindungsgemäß dadurch gelöst, dass die Grobkompensationseinrichtung durch Stromquellen im im Sende- und Empfangsteil gebildet wird und dazu ausgebildet ist, unter Nutzung von Arbeitswiderständen des Mischers zeitlich konstante Anteile des Gleichspannungsoffsets schon im Sende- und Empfangsteil zu kompensieren.

Der Gleichspannungsoffset im Basisbandsignal setzt sich aus mehreren Anteilen zusammen, die auf unterschiedliche Quellen zurückzuführen sind, u.a. auf ein internes Übersprechen zwischen Sende- und Empfangskanal, einbaubedingte Reflexionen des Radarsignals an Fahrzeugkomponenten wie Stoßfängern, dem Radom des Radarsensors und dergleichen, Reflexionen des Radarsignals durch Verschmutzung oder Vereisung der Radarantenne bzw. des Radoms, sowie Temperaturdrift und Alterung der elektronischen Komponenten des Radarsensors. Während einige dieser Faktoren zeitlichen Änderungen unterliegen, sind andere Faktoren zeitlich konstant oder haben zumindest eine relativ große zeitlich konstante Komponente. Dies gilt beispielsweise für Gleichspannungsanteile, die auf internem Übersprechen zwischen dem Sende- und Empfangskanal sowie auf einbaubedingten Reflexionen beruhen.

Erfindungsgemäß werden nun diese zeitlich im wesentlichen konstanten Anteile des Gleichspannungsoffsets bereits durch die Grobkompensationseinrichtung im Sende- und Empfangsteil kompensiert, so dass die Feinkompensationseinrichtung in der Auswerteschaltung nur noch die verbleibenden Gleichspannungsanteile zu kompensieren braucht, die eine höhere zeitliche Variabilität haben. Da diese variablen Gleichspannungsanteile eine geringere Amplitude haben, lässt sich die Kompensation mit geringen Widerstandswerten und folglich mit einer entsprechend rauscharmen Feinkompensationseinrichtung bewirken. Auf Seiten der Grobkompensationseinrichtung macht sich die Erfindung den Umstand zunutze, dass im Mischer das Sende- und Empfangsteil ohnehin unverzichtbare Arbeitswiderstände vorhanden sein müssen, die einen gewissen, nicht vermeidbaren Beitrag zum Gesamtrauschen des Radarsensors liefern. Durch Ausnutzung dieser ohnehin vorhandenen Arbeitswiderstände kann somit die Grobkompensationseinrichtung die im wesentlichen konstanten Anteile des Gleichspannungsoffsets weitgehend kompensieren, ohne dass dafür eine zusätzliche Erhöhung des Rauschanteils erforderlich ist.

Vorteilhafte Ausgestaltungen der Erfindung sind in den Unteranprüchen angegeben.

Im folgenden wird ein Ausführungsbeispiel anhand der Zeichnung näher erläutert.

Es zeigen:
- Fig. 1: ein Blockdiagramm eines erfindungsgemäßen Radarsensors; und
- Fig. 2: Zeitdiagramme eines Basisbandsignals in dem Radarsensor nach Fig. 1.

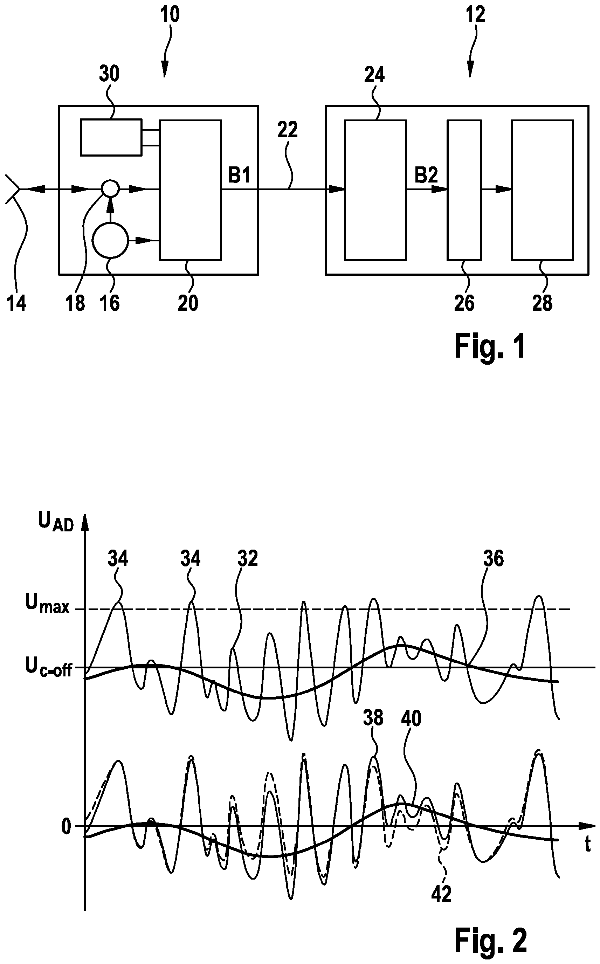

Der in Fig. 1 vereinfacht als Blockdiagramm dargestellte Radarsensor weist ein Sende- und Empfangsteil 10 in Form eines MMIC (Monolithic Microwave Integrated Circuit) und eine Auswerteschaltung 12 in der Form eines RADAR-ASICs auf. Mit dem Sende- und Empfangsteil 10 ist eine Antenne 14 verbunden, die von einem lokalen Oszillator 16 ein frequenzmoduliertes Radarsignal erhält, dass dann von der Antenne in die Umgebung abgestrahlt wird. Das an Objekten reflektierte Radarecho wird wieder von der Antenne 14 empfangen und in einem Koppler 18 von dem vom lokalen Oszillator 16 gelieferten Signal getrennt und an einen Eingang eines Mischers 20 weitergeleitet. Einem anderen Eingang des Mischers 20 wird direkt das vom lokalen Oszillator 16 erzeugte Signal (gesendetes Signal) zugeführt. Im Mischer 20 wird dieses gesendete Signal mit dem über die Antenne 14 empfangenen Signal gemischt, so dass man am Ausgang des Mischers ein Basisbandsignal B1 erhält, dessen Frequenz dem Frequenzunterschied zwischen dem gesendeten Signal und dem empfangenen Signal entspricht. Dieses Basisbandsignal B1 wird über eine Gleichspannungskopplungseinrichtung 22 (z.B. eine galvanische Leitung ohne kapazitive oder induktive Elemente, die den Gleichspannunsanteil unterdrücken würden) an eine Feinkompensationseinrichtung 24 in der Auswerteschaltung 12 weitergeleitet. Das Basisbandsignal wird in der Feinkompensationseinrichtung 24 modifiziert und als Basisbandsignal B2 ausgegeben. Dieses Basisbandsignal wird in einem Verstärker 26 verstärkt und schließlich einem Analog/Digital-Wandler 28 zugeführt.

Verschiedene Faktoren, insbesondere Reflexionen des gesendeten Radarsignals an nahen Objekten, internes Übersprechen zwischen Sende- und Empfangskanal im Sende- und Empfangsteil 10 sowie Alterung und Temperaturdrift verschiedener elektronischer Komponenten führen dazu, dass das im Mischer 20 entstehende Basisbandsignal verschiedene Gleichspannungsanteile enthält. Einige dieser Gleichspannungsanteile sind zeitlich im wesentlichen konstant und werden schon im Sende- und Empfangsteil 10 mit Hilfe einer Grobkompensationseinrichtung 30 kompensiert. Zu diesem Zweck speist die Grobkompensationseinrichtung 30 einen Kompensationsstrom in die Arbeitswiderstände des Mischers 20 ein. Bei diesem Mischer handelt es sich beispielsweise um einen Gilberzellenmischer mit bekanntem Aufbau. Der von der Grobkompensationseinrichtung 30 erzeugte Strom führt zu einem Spannungsabfall an den Arbeitswiderständen, und durch diesen Spannungsabfall werden die konstanten Gleichspannungsanteile im Basisbandsignal bereits ausgefiltert, so dass das Basisbandsignal B1, das schließlich am Mischerausgang anliegt, bereits einen deutlich reduzierten Gleichspannungsoffset aufweist. Die zeitlich variableren Gleichspannungsanteile im Basisbandsignal B1 werden dann mit Hilfe der Feinkompensationseinrichtung 24 kompensiert, so dass das dem Verstärker 26 zugeführte Basisbandsignal B2 praktisch keinen Gleichspannungsoffset mehr aufweist.

Die Feinkompensationseinrichtung 24 bewirkt die Feinkompensation des Gleichspannungsoffsets mit Hilfe von nicht gezeigten Stromquellen und Widerständen, wie im Prinzip von herkömmlichen Radarsensoren bekannt ist. Da das Basisbandsignal jedoch bereits eine Grobkompensation erfahren hat, sind die Gleichspannungsanteile, die die Feinkompensationseinrichtung 24 noch unterdrücken muss, verhältnismäßig klein. Das bedeutet, dass die Feinkompensationseinrichtung 24 durch Wahl niedriger Widerstandswerte sehr rauscharm ausgelegt werden kann.

Der größere Anteil des Gleichspannungsoffsets wird mit Hilfe der Grobkompensationseinrichtung 30 bereits im Sende- und Empfangsteil 10 unterdrückt. Da jedoch die Grobkompensationseinrichtung 30 dazu die ohnehin im Mischer vorhandenen Arbeitswiderstände nutzt, führt diese Grobkompensation nicht zu einer Zunahme des Gesamtrauschens. Insgesamt wird somit eine wirksame Unterdrückung der Gleichspannungskomponente bei geringen Stromstärken und mit entsprechend geringer Verlustleistung erreicht, ohne dass dadurch die Rauschanteile im Basisbandsignal B2 erhöht würden.

Die Stromquellen, die die Grobkompensationseinrichtung bilden, sind Bestandteil des MMIC und können folglich wie das gesamte MMIC vor Inbetriebnahme programmiert werden. Während des Betriebs des Radarsensors sind somit diese Stromquellen weitestgehend von jeglicher Ansteuerung entkoppelt. Die Stromquellen werden so programmiert, dass sie den auf lange Sicht konstanten Anteil des Gleichspannungsoffsets eliminieren, wie nachstehend anhand eines in Fig. 2 illustrierten Beispiels erläutert werden soll.

In Fig. 2 gibt eine Kurve 32 den Verlauf des Basisbandsignals an, dass man am Ausgang des Mischers 20 erhielte, wenn die Grobkompensationseinrichtung 30 nicht wirksam wäre. Die Kurve 32 ist (wie auch alle anderen Spannungskurven in Fig. 2) so skaliert, dass sie die Spannung U_{AD} angibt, die man nach Verstärkung im Verstärker 26, also am Eingang des Analog/Digital-Wandlers 28 erhielte. Man erkennt an der Kurve 32, dass das ursprünglich im Mischer 20 entstehende Basisbandsignal (ohne Grobkompensation) einen zeitlich konstanten Gleichspannungsoffset U_{c-off} von beträchtlicher Größe enthält. Dieser Offset (im gezeigten Beispiel zur positiven Seite) führt dazu, dass das durch die Kurve 32 angegebene Signal zeitweise eine Schranke Uₘₐₓ überschreitet, die die Obergrenze des Spannungsfensters des Analog/Digital-Wandlers 128 repräsentiert. Die Scheitel der in Fig. 2 mit 34 bezeichneten Peaks, die über Uₘₐₓ hinausgehen, würden daher bei der weiteren Verarbeitung im Analog/Digital-Wandler 28 "abgeschnitten", so dass man eine unerwünschte Signalverzerrung und damit ein verfälschtes Frequenzspektrum erhielte.

Eine Kurve 36 in Fig. 2 gibt den Verlauf des Basisbandsignals an, den man nach Filterung mit einer relativ großen Zeitkonstanten erhielte, und repräsentiert somit einen zeitlich variablen Gleichspannungsoffset des Basisbandsignals.

Die Grobkompensationseinrichtung 30 ist nun so progammiert, dass sie den konstanten Gleichspannungsoffset U_{c-off} kompensiert. Als Ergebnis erhält man so am Ausgang des Mischers 20 das bereits grob kompensierte Basisbandsignal B1, das in Fig. 2 durch eine Kurve 38 in durchgezogenen Linien angegeben wird. Dieses Signal liegt auch bei großen Ausschlägen innerhalb des Spannungsfensters des Analog/Digital-Wandlers 28 und wird deshalb auch bei der Digitalisierung nicht verzerrt. Das durch die Kurve 38 angegebene Signal weist nur noch einen zeitlich variablen Gleichspannungsoffset auf, der nun durch die Kurve 40 angegeben wird (Kurve 36 um U_{c-off} verschoben). Da der konstante Gleichspannungsoffset bereits eliminiert wurde, oszilliert die Kurve 40 um die Null-Linie. Durch die Feinkompensationseinrichtung 24 wird schließlich auch der durch die Kurve 40 repräsentierte variable Anteil des Gleichspannungsoffsets kompensiert. Das dadurch am Eingang des Verstärkers 26 erhaltene Basisbandsignal B2 wird in Fig. 2 durch die gestrichelt eingezeichnete Kurve 22 repräsentiert und oszilliert mit variabler Amplitude um die Null-Linie, weist also praktisch keinen Gleichspannungsoffset mehr auf.

## Patentansprüche

1. Radarsensor für Kraftfahrzeuge, mit einem Sende- und Empfangsteil (10), das einen Mischer (20) zum Mischen eines gesendeten Signals mit einem empfangenen Signal aufweist, einer Auswerteschaltung (12), die durch eine Gleichspannungskopplungseinrichtung (22) mit einem Ausgang des Mischers (20) verbunden ist, und mit einer Kompensationseinrichtung (24, 30) zur Kompensation eines Gleichspannungsoffsets im Ausgangssignal des Mischers (20), wobei die Kompensationseinrichtung aufgeteilt ist in eine Grobkompensationseinrichtung (30) und eine Feinkompensationseinrichtung (24) in der Auswerteschaltung (12), **dadurch gekennzeichnet, dass** die Grobkompensationseinrichtung durch Stromquellen im (30) im Sende- und Empfangsteil (10) gebildet wird und dazu ausgebildet ist, unter Nutzung von Arbeitswiderständen des Mischers (20) zeitlich konstante Anteile des Gleichspannungsoffsets schon im Sende- und Empfangsteil (10) zu kompensieren.

2. Radarsensor nach Anspruch 1, bei dem das Sende- und Empfangsteil (10) ein MMIC ist.

3. Radarsensor nach Anspruch 1 bei dem der Mischer (20) ein Gilbertzellenmischer ist.

4. Radarsensor nach Anspruch 1 oder 3 bei dem die Stromquelle der Grobkompensationseinrichtung (30) zur Abgabe eines konstanten Stromes programmierbar ist.

## Claims

1. Radar sensor for motor vehicles, having a transmitting and receiving part (10) which has a mixer (20) for mixing a transmitted signal with a received signal, an evaluation circuit (12) which is connected to an output of the mixer (20) by means of a DC voltage coupling device (22), and a compensation device (24, 30) for compensating for a DC voltage offset in the output signal from the mixer (20), the compensation device being divided into a coarse compensation device (30) and a fine compensation device (24) in the evaluation circuit (12), **characterized in that** the coarse compensation device is formed by current sources (30) in the transmitting and receiving part (10) and is designed to compensate for temporally constant components of the DC voltage offset already in the transmitting and receiving part (10) using load resistances of the mixer (20).

2. Radar sensor according to Claim 1, in which the transmitting and receiving part (10) is an MMIC.

3. Radar sensor according to Claim 1, in which the mixer (20) is a Gilbert cell mixer.

4. Radar sensor according to Claim 1 or 3, in which the current source of the coarse compensation device (30) can be programmed to output a constant current.

## Revendications

1. Capteur radar pour véhicules automobiles, comportant une partie émettrice et réceptrice (10) qui comprend un mélangeur (20) destiné à mélanger un signal émis à un signal reçu, un circuit d'évaluation (12) qui est relié par l'intermédiaire d'un dispositif de couplage à tension continue (22) à une sortie du mélangeur (20), et comportant un dispositif de compensation (24, 30) destiné à compenser un décalage de tension continue dans le signal de sortie du mélangeur (20), dans lequel le dispositif de compensation est subdivisé en un dispositif de compensation grossière (30) et un dispositif de compensation fine (24) dans le circuit d'évaluation (12), **caractérisé en ce que** le dispositif de compensation grossière (30) est formé par des sources de courant contenues dans la partie émettrice et réceptrice (10) et est conçu pour compenser, par utilisation de résistances de travail du mélangeur (20), des parties constantes dans le temps du décalage de tension continue déjà contenu dans la partie émettrice et réceptrice (10).

2. Capteur radar selon la revendication 1, dans lequel la partie émettrice et réceptrice (10) est un MMIC.

3. Capteur radar selon la revendication 1, dans lequel le mélangeur (20) est un mélangeur à cellule de Gilbert.

4. Capteur radar selon la revendication 1 ou 3, dans lequel la source de courant du dispositif de compensation grossière (30) est programmable pour délivrer un courant constant.
